# EUROPÄISCHE PATENTSCHRIFT

(11) **EP 2 903 716 B1**
(45) Veröffentlichungstag und Bekanntmachung des Hinweises auf die Patenterteilung: **17.08.2016**
(21) Anmeldenummer: 13811824.5
(22) Anmeldetag: 05.12.2013
(51) Int. Cl.: B01D 46/00, B01D 46/10, F01D 25/32

(54) **DAMPFSIEB**
STEAM STRAINER
CRIBLE À VAPEUR

(30) Priorität: 20.12.2012 EP 12198304
(43) Veröffentlichungstag der Anmeldung: 12.08.2015
(73) Patentinhaber: Siemens Aktiengesellschaft, 80333 München (DE)
(72) Erfinder: REHME, Olaf, 20148 Hamburg (DE); TRÜBEL, Armin, 90461 Nürnberg (DE)
(86) Internationale Anmeldenummer: PCT/EP2013/075612
(87) Internationale Veröffentlichungsnummer: WO 2014/095380

(56) Entgegenhaltungen:
- DE-A1- 2 350 488
- DE-A1- 2 619 403
- DE-A1- 2 649 376
- DE-A1-102009 007 240
- US-A- 5 575 618

## Beschreibung

Die Erfindung betrifft ein Dampfsieb und ein Herstellungsverfahren für ein solches Dampfsieb

Ein Dampfsieb ist ein Bauteil innerhalb eines Schnellverschlussventils in Turbomaschinen. Ein Schnellschlussventil erlaubt die schlagartige Unterbrechung einer Rohrströmung. Das Dampfsieb dient dem Schutz des Schnellschlussventils, speziell der beweglichen Teile und der nachfolgenden von in der Strömung mitgetragenen Fremdkörpern, die zum Funktionsausfall des Schnellschlussventils oder zur Beschädigung nachfolgender Anlagenteile, wie beispielsweise den Schaufeln, führen können.

In einer gängigen Ausführungsform besitzt das Dampfsieb eine hülsenartige Gestalt mit einer zylindrischen oder konischen Mantelfläche, der Siebfläche, welche von außen nach innen durchströmt wird. Nachteilig bei der Verwendung der Dampfsiebe ist die Vergrößerung des Strömungswiderstandes der betreffenden Dampfpassage und der hohen Druckverluste in der Strömung. Insbesondere bei einfachen Wickel- und Lochsieben sind sehr hohe Druckverluste zu beobachten, die sich nachteilig auf die Leistung der Dampfturbine auswirken.

Aus der DE 375 304 C ist ein Dampfsieb bekannt, bei welchem ein Siebkörper durch Aufwickeln nebeneinanderliegender Drähte auf eine Filtertrommel hergestellt wird.

Aus der DE 102009007240 A1 ist ein Dampfsieb mit einer korrugierten Siebfläche bekannt.

Dampfsiebe sind jedoch den in einer Dampfturbine vorherrschenden Belastungen, beispielsweise den Schwingungsbelastungen oder den Temperaturschwankungen ausgesetzt. Diese können das Dampfsieb nach einer relativ kurzen Einsatzzeit zerstören.

Das Dampfsieb ist nur sehr eingeschränkt für Reparaturen geeignet. Das Zusetzen der durchströmten Fläche von Fremdpartikeln oder Beschädigungen der Mantelfläche resultieren meist im Tausch des gesamten Dampfsiebs. Zudem steigt der Fertigungsaufwand für eine Mantelfläche mit einer optimierten Durchströmungsfläche unter Verwendung konventioneller Fertigungstechnologien beispielsweise Drehen, Fräsen, Bohren oder Schweißen deutlich an. Dies ist jedoch sehr kostenintensiv.

Es ist daher eine erste Aufgabe der Erfindung ein Dampfsieb anzugeben, welches das zuvor genannte Problem überwindet. Eine zweite Aufgabe liegt in der Angabe eines Herstellungsverfahrens für ein solches Dampfsieb.

Die erste Aufgabe wird gelöst durch die Angabe eines Dampfsiebs, welches einen skelettartigen Rohrkörper aufweist, in welchem zur Ausbildung einer Mantelfläche zumindest zwei schalenförmige Einzelelemente zur Anbringung vorgesehen sind, wobei der skelettartige Rohrkörper zwei Deckflächen aufweist, die durch zumindest eine die zwei Deckflächen verbindende Längsstrebe auf einem definierten Abstand gehalten werden und wobei die zumindest zwei schalenförmigen Einzelelemente mehrere Sieböffnungen aufweisen und wobei die zumindest zwei schalenförmigen Einzelelemente und die zumindest eine Längsstrebe separat austauschbar sind.

Erfindungsgemäß wird damit die Mantelfläche des Dampfsiebes aus mehreren Einzelelementen gebildet. Dies entspricht einem modularen Aufbau. Zumindest die zwei schalenförmigen Einzelelemente und die zumindest eine Längsstrebe können im Schadensfall separat ausgetauscht werden, so dass die anderen Teile des Dampfsiebs bei der Montage bzw. Demontage nicht beschädigt werden. Dadurch können kostenintensive andere Teile des Dampfsiebs erhalten bleiben. Ebenfalls werden Kosten durch Vermeidung des Austauschs des gesamten Dampfsiebs verhindert. Auch kann das Dampfsieb bei Wartungszwecken zerlegt und beispielsweise gesäubert werden. Dadurch kann eine verbesserte Funktionsweise und eine längere Lebensdauer erzielt werden.

Bevorzugt ist die durch die zumindest zwei schalenförmigen Einzelelemente gebildete Mantelfläche geschlossen, so dass die technischen Anforderungen, welche an Dampfsiebe gestellt werden, beispielsweise das Aussieben der Fremdkörper, erfüllt sind.

Der skelettartige Rohrkörper kann zudem zwei Deckflächen aufweisen, die durch zumindest eine die zwei Deckflächen verbindende Längsstrebe auf einem definierten Abstand gehalten werden. Dabei sind selbstverständlich auch mehr Längsstreben vorstellbar. Auch die zumindest eine Längsstrebe ist separat austauschbar. Die zumindest eine Längsstrebe kann durch Fixierelemente an den beiden Deckflächen fixiert sein. Dabei kann es sich hier um eine lösbare Verbindung handeln, so dass im Schadensfall auch die zumindest eine Längsstrebe bzw. die beiden oder eine der beiden Deckflächen separat ausgetauscht werden können, ohne andere Teile des Dampfsiebes bei der Montage bzw. Demontage zu beschädigen. Die schalenförmigen Einzelelemente werden quasi von einer zu beispielsweise Wartungs- oder Reparaturzwecken zerlegbaren "Rahmenkonstruktion" zusammengehalten.

Bevorzugt weist der skelettartige Rohrkörper zumindest eine Zwischenfläche auf, welche durch die zumindest eine Längsstrebe mit den zwei Deckflächen verbunden ist. Dieses ist zumeist parallel zu zumindest einer der beiden Deckflächen. Dadurch kann die Anzahl der schalenförmigen Einzelelemente, welche für die gesamte Mantelfläche benötigt wird, erhöht werden. Bei einem Austausch muss nun ein kleineres, schalenförmiges Einzelelement ausgetauscht werden, wodurch sich eine Kostenreduktion ergeben kann. Auch die Zwischenfläche kann separat ausgetauscht werden.

Bevorzugt sind die zumindest zwei schalenförmigen Einzelelemente an dem skelettartigen Rohrkörper fixierbar. Hierbei kann es sich um lösbare Verbindungen wie Schrauben und Mutter handeln.

Die zweite Aufgabe wird gelöst durch die Angabe eines Verfahrens zur Herstellung eines Dampfsiebes, welches folgende Schritte umfasst:
- Bereitstellen eines skelettartigen Rohrkörpers der zwei Deckflächen aufweist,
- Bereitstellen von zumindest zwei schalenförmigen Einzelelementen,
- Bereitstellen von zumindest eine die zwei Deckflächen verbindende Längsstrebe welche die zwei Deckflächen auf einem definierten Abstand halten,
- Ausbilden einer Mantelfläche durch das Anbringen von den zumindest zwei schalenförmigen Einzelelementen an den skelettartigen Rohrkörper, so dass die zumindest zwei schalenförmigen Einzelelemente und die zumindest eine Längsstrebe separat austauschbar sind.

Die zumindest zwei schalenförmigen Einzelelemente werden bevorzugt durch selektives Laserschmelzen gefertigt.

Um den Fertigungsaufwand der schalenförmigen Einzelelemente niedrig zu halten und gleichzeitig eine gute Durchströmung mit reduziertem Druckverlust zu erreichen, wird das selektive Laserschmelzen als Fertigungsverfahren eingesetzt. Dadurch ergeben sich geringe Fertigungskosten. Vorteilhaft ist zudem, dass die Anzahl der Fertigungsschritte im Vergleich zu konventionellen Herstellungsmethoden für vergleichbare Mantelflächen wesentlich reduziert ist. Dies resultiert aufgrund der hohen Geometriefreiheit und der endkonturnahen Fertigung. Somit ist es zudem möglich die Sieböffnungen der Mantelfläche und die Mantelfläche selber derart zu gestalten, dass eine optimale Strömungsführung mit einem niedrigen Druckverlust erzielt werden kann. Insbesondere kann dieses erzielt werden, indem ein Querschnitt, welcher über die schalenförmigen Einzelelemente der Mantelfläche in Umfangsrichtung gebildet wird, derart ausgestaltet ist, dass das durchströmende Medium sinnvoll umgelenkt und die Strömungsgeschwindigkeit über diesen Querschnitt reduziert wird.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1:: eine Explosionszeichnung eines erfindungsgemäßen Dampfsiebs, und
- FIG 2:: zeigt ein erfindungsgemäßes Dampfsieb.

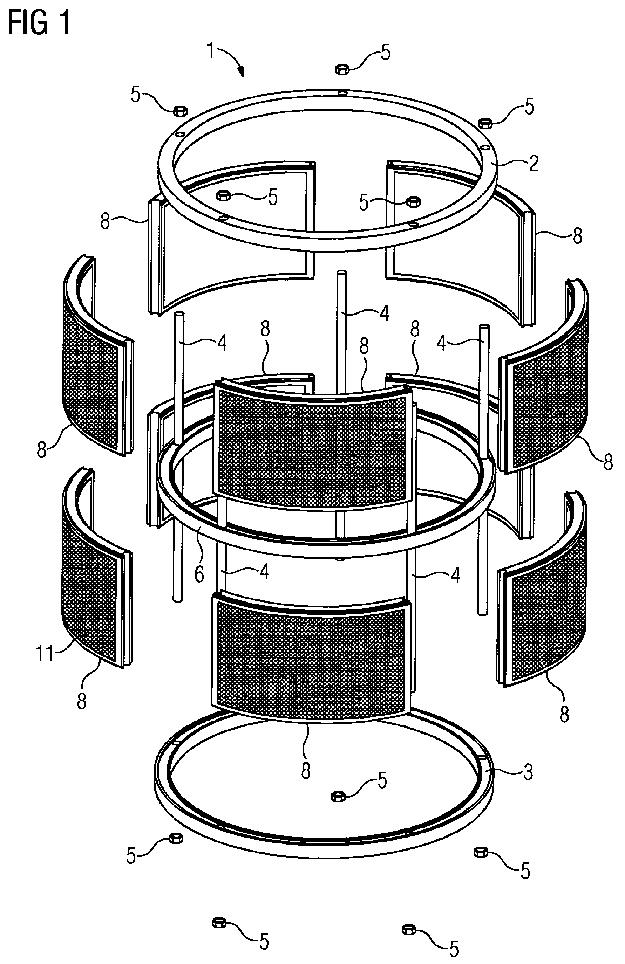

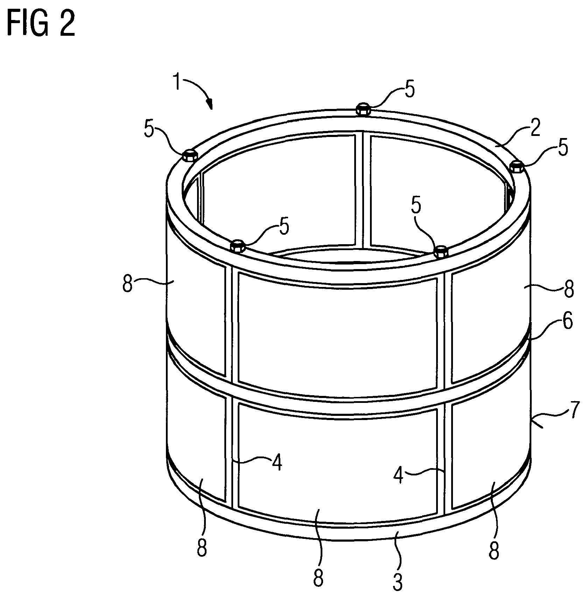

FIG 1 zeigt die Explosionszeichnung eines erfindungsgemäßen Dampfsiebs 1, welches modular gefertigt wird. Dies umfasst einen skelettartigen Rohrkörper, der aus einer oberen Deckfläche 2 und einer unteren Deckfläche 3 besteht. Zusätzlich umfasst der skelettartige Rohrkörper noch fünf Längsstreben 4, die die obere Deckfläche 2 und die untere Deckfläche 3 mit einem vorgegebenen Abstand verbinden. Zur Fixierung der Längsstreben 4 an der Deckflächen 2,3 können noch Fixierelemente 5 verwendet werden. Die Längsstreben 4 können lösbar an den Deckflächen 2,3 angebracht werden, so dass sie im Schadensfall separat ausgetauscht werden können. Somit können auch die beiden Deckflächen 2,3 separat ausgetauscht werden. Selbstverständlich ist auch jede andere Anzahl von Längsstreben 4 möglich. Zusätzlich besitzt der skelettartige Rohrkörper noch eine Zwischenfläche 6, die parallel zu der oberen Deckfläche 2 und der unteren Deckfläche 3 angeordnet ist und durch die fünf Längsstreben 4 mit diesen verbunden sind. Auch diese Zwischenfläche 6 kann separat ausgetauscht werden. Dabei ist die Zwischenfläche 6 aus Steifheitsgründen bevorzugt mittig zwischen der oberen Deckfläche 2 und der unteren Deckfläche 3 angeordnet. Selbstverständlich ist die Anzahl der Zwischenflächen 6 nicht beschränkt, auch kann der skelettartige Rohrkörper überhaupt keine Zwischenfläche 6 aufweisen. Die Mantelfläche 7 (FIG 2) wird nun durch mehrere, schalenförmige Einzelelemente 8, so genannte Kacheln, gebildet. Die schalenförmigen Einzelelemente 8 können mit Hilfe anderer Teile auf eine geeignete Art am skelettförmigen Rohrkörper, das heißt hier an der oberen Deckfläche 2 der unteren Deckfläche 3, der Längsstreben 4 und der Zwischenfläche 6 fixiert werden, so dass eine vollständige, geschlossene Mantelfläche 7 (FIG 2) entsteht. Beispielsweise können die schalenförmigen Einzelelemente 8 in die Deckfläche 2 und in die Deckfläche 3 als auch in die Längsstreben 4 eingeschoben werden. Die schalenförmigen Einzelelemente 8 weisen zudem mehrere Sieböffnungen 11 auf. Die Sieböffnungen 11 können dabei in Lamellenform oder aber Löcher sein oder andere bekannte Sieböffnungen 11. Die schalenförmigen Einzelelemente 8 werden so montiert, dass eine geschlossene Mantelfläche 7 (FIG 2) entsteht, die die technischen Anforderungen, welche ein Dampfsieb 1 aufweisen muss, erfüllt. Zudem werden die schalenförmigen Einzelelemente 8 so montiert, dass im Fall einer Beschädigung, beispielsweise das Zusetzen durch kleine Partikel, die schalenförmigen Einzelelemente 8 separat getauscht werden können. Dadurch können kostenintensive andere Teile des Dampfsiebs 1 erhalten bleiben. Ebenfalls werden Kosten durch Vermeidung des Austauschs des gesamten Dampfsiebes 1 verhindert. Da die Längsstreben 4 oder die Zwischenfläche 6 bzw. die obere Deckfläche 2 und/oder die untere Deckfläche 3 ebenfalls lösbar fixiert sind, erlaubt der modulare Aufbau des Dampfsiebes 1 auch ein separates Tauschen dieser Teile. Das Dampfsieb 1 wird dabei modular so zusammengesetzt, dass eine Demontage bzw. Montage einzelner Teile, insbesondere der schalenförmigen Einzelelemente 8, nicht zu einer Beschädigung der anderen Teile des Dampfsiebs 1 führt.

Um den Fertigungsaufwand der Elemente niedrig zu halten und gleichzeitig eine gute Durchströmung mit reduziertem Druckverlust zu erhalten, können die schalenförmigen Einzelelemente 8 mit selektivem Laserschmelzen (SLM) hergestellt werden. Hier werden die schalenförmigen Einzelelemente 8 durch ein schichtenweises Aufbauen aus einem pulverförmigen, metallischen Werkstoff mit Hilfe eines CAD-Modells hergestellt. Dabei wird jede Pulverschicht vor dem Aufbringen der nächsten Pulverschicht mit einem fokussierten Laserstrahl in dem durch die CAD-Daten vorgegebenen Bereich erhitzt und mit der darunterliegenden Schicht verbunden. Durch kontinuierliche Wiederholung des Vorgangs kann so das schalenförmige Einzelelement 8 hergestellt werden. Vorteilhaft hierbei sind die hohe Geometriefreiheit und die endkonturnahe Fertigung. Insbesondere von Vorteil ist auch, dass im Vergleich zu konventionellen Herstellungsmethoden für ein vergleichbares schalenförmiges Einzelelement 8 mit Sieböffnungen 11, die Anzahl der Fertigungsschritte wesentlich reduziert ist, woraus sich eine hohe Kostenreduktion in der Fertigung ergibt.

Die schalenförmigen Einzelelemente 8 der Mantelfläche 7 (FIG 2) mit den Sieböffnungen 11 können durch das selektive Laserschmelzen derart gestaltet werden, dass eine optimale Strömungsführung erzielt werden kann. Dadurch resultiert ein niedrigerer Druckverlust, der zu einem höheren Wirkungsgrad der Dampfturbine führt.
Die Sieböffnungen 11 der schalenförmigen Einzelelemente 8 der Mantelfläche 7 (FIG 2) werden dabei derart gestaltet, dass eine, unter Berücksichtigung von Restriktionen, die in der betreffenden Dampfturbine gelten, optimale Strömungsführung erreicht wird. Insbesondere kann dieses erzielt werden, indem ein Querschnitt, welcher über die schalenförmigen Einzelelemente 8 der Mantelfläche 7 (FIG 2) in Umfangsrichtung gebildet wird, derart ausgestaltet ist, dass das durchströmende Medium sinnvoll umgelenkt und die Strömungsgeschwindigkeit über diesem Querschnitt reduziert wird.

## Patentansprüche

1. Dampfsieb (1)
**gekennzeichnet durch**
einen skelettartigen Rohrkörper, in welchem zur Ausbildung einer Mantelfläche (7) zumindest zwei schalenförmige Einzelelemente (8) zur Anbringung vorgesehen sind, wobei der skelettartige Rohrkörper zwei Deckflächen (2,3) aufweist, die durch zumindest eine die zwei Deckflächen (2,3) verbindende Längsstrebe (4) auf einem definierten Abstand gehalten werden und wobei die zumindest zwei schalenförmigen Einzelelemente (8) mehrere Sieböffnungen (11) aufweisen und wobei die zumindest zwei schalenförmigen Einzelelemente (8) und die zumindest eine Längsstrebe (4) separat austauschbar sind.

2. Dampfsieb (1) nach Anspruch 1,
**dadurch gekennzeichnet, dass**
die durch die zumindest zwei schalenförmigen Einzelelemente (8) gebildete Mantelfläche (7) geschlossen ist.

3. Dampfsieb (1) nach einem der vorhergehenden Ansprüche,
**dadurch gekennzeichnet, dass**
der skelettartige Rohrkörper zumindest eine Zwischenfläche (6) aufweist, welche durch die zumindest eine Längsstrebe (4) mit den zwei Deckflächen (2,3) verbunden ist.

4. Dampfsieb (1) nach Anspruch 3,
**dadurch gekennzeichnet, dass**
die Zwischenfläche (6) parallel zu zumindest einer der zwei Deckflächen (2,3) ist.

5. Dampfsieb (1) nach Anspruch 3 oder 4,
**dadurch gekennzeichnet, dass**
die Zwischenfläche (6) ebenfalls separat austauschbar ist.

6. Dampfsieb (1) nach einem der vorhergehenden Ansprüche,
**dadurch gekennzeichnet, dass**
die zumindest zwei schalenförmigen Einzelelemente (8) an dem skelettartigen Rohrkörper fixierbar sind.

7. Verfahren zur Herstellung eines Dampfsiebes (1) umfassend die Schritte:
- Bereitstellen eines skelettartigen Rohrkörpers der zwei Deckflächen (2,3) aufweist,
- Bereitstellen von zumindest zwei schalenförmigen Einzelelementen (8),
- Bereitstellen von zumindest eine die zwei Deckflächen (2,3) verbindende Längsstrebe (4) welche die zwei Deckflächen (2,3) auf einem definierten Abstand halten,
- Ausbilden einer Mantelfläche (7) durch das Anbringen von den zumindest zwei schalenförmigen Einzelelementen (8) an den skelettartigen Rohrkörper, so dass die zumindest zwei schalenförmigen Einzelelemente (8) und die zumindest eine Längsstrebe (4) separat austauschbar sind.

8. Verfahren zur Herstellung eines Dampfsiebes nach Anspruch 7,
**dadurch gekennzeichnet, dass**
die zumindest zwei schalenförmigen Einzelelemente (8) durch selektives Laserschmelzen gefertigt werden.

## Claims

1. Steam strainer (1)
**characterized by**
a skeleton-like tubular body in which, for forming a lateral surface (7), at least two shell-like individual elements (8) are provided to be attached, wherein the skeleton-like tubular body has two end surfaces (2, 3) which are held at a defined separation by at least one longitudinal strut (4) connecting the two end surfaces (2, 3) and wherein the at least two shell-like individual elements (8) have multiple strainer openings (11) and wherein the at least two shell-like individual elements (8) and the at least one longitudinal strut (4) can be exchanged separately.

2. Steam strainer (1) according to Claim 1,
**characterized in that**
the lateral surface (7) formed by the at least two shell-like individual elements (8) is closed.

3. Steam strainer (1) according to either of the preceding claims,
**characterized in that**
the skeleton-like tubular body has at least one intermediate surface (6) which is connected to the two end surfaces (2, 3) by the at least one longitudinal strut (4).

4. Steam strainer (1) according to Claim 3,
**characterized in that** the intermediate surface (6) is parallel to at least one of the two end surfaces (2, 3).

5. Steam strainer (1) according to Claim 3 or 4,
**characterized in that** the intermediate surface (6) can also be exchanged separately.

6. Steam strainer (1) according to one of the preceding claims,
**characterized in that**
the at least two shell-like individual elements (8) can be attached to the skeleton-like tubular body.

7. Method for manufacturing a steam strainer (1), comprising the steps of:
- preparing a skeleton-like tubular body which has two end surfaces (2, 3),
- preparing at least two shell-like individual elements (8),
- preparing at least one longitudinal strut (4) which connects the two end surfaces (2, 3) and which holds the two end surfaces (2, 3) at a defined separation,
- forming a lateral surface (7) by attaching the at least two shell-like individual elements (8) to the skeleton-like tubular body, such that the at least two shell-like individual elements (8) and the at least one longitudinal strut (4) can be exchanged separately.

8. Method for manufacturing a steam strainer according to Claim 7,
**characterized in that** the at least two shell-like individual elements (8) are made by selective laser melting.

## Revendications

1. Filtre ( 1 ) à vapeur
**caractérisé par**
un corps tubulaire de type squelette, dans lequel sont prévus, pour le montage, afin de constituer une surface ( 7 ) d'enveloppe, au moins deux éléments ( 8 ) individuels en forme de coque, le corps tubulaire de type squelette ayant deux surfaces ( 2, 3 ) de recouvrement, qui sont maintenues à une distance définie par au moins un longeron ( 4 ) reliant les surfaces ( 2, 3 ) de recouvrement, les au moins deux éléments ( 8 ) individuels en forme de coque ayant plusieurs ouvertures ( 11 ) de filtre et les au moins deux éléments ( 8 ) individuels en forme de coque et le au moins un longeron ( 4 ) pouvant être remplacés séparément.

2. Filtre ( 1 ) à vapeur suivant la revendication 1,
**caractérisé en ce que**
la surface ( 7 ) d'enveloppe formée par les au moins deux éléments ( 8 ) individuels en forme de coque est fermée.

3. Filtre ( 1 ) à vapeur suivant l'une des revendications précédentes,
**caractérisé en ce que**
le corps tubulaire de type squelette a au moins une surface ( 6 ) intermédiaire, qui est reliée aux deux surfaces ( 2, 3 ) de recouvrement par le au moins un longeron ( 4 ).

4. Filtre ( 1 ) à vapeur suivant la revendication 3,
**caractérisé en ce que**
la surface ( 6 ) intermédiaire est parallèle à au moins l'une des deux surfaces ( 2, 3 ) de recouvrement.

5. Filtre ( 1 ) à vapeur suivant la revendication 3 ou 4,
**caractérisé en ce que**
la surface ( 6 ) intermédiaire peut être remplacée également indépendamment.

6. Filtre ( 1 ) à vapeur suivant l'une des revendications précédentes,
**caractérisé en ce que**
les au moins deux éléments ( 8 ) individuels en forme de coque peuvent être immobilisés sur le corps tubulaire de type squelette.

7. Procédé de fabrication d'un filtre ( 1 ) à vapeur comprenant les stades :
- on se procure un tube tubulaire de type squelette qui a deux surfaces ( 2, 3 ) de recouvrement,
- on se procure au moins deux éléments ( 8 ) individuels en forme de coque,
- on se procure au moins un longeron ( 4 ) s'étendant entre les deux surfaces ( 2, 3 ) de recouvrement qui maintiennent à une distance définie les deux surfaces ( 2, 3 ) de recouvrement,
- on constitue une surface ( 7 ) d'enveloppe en montant les au moins deux éléments ( 8 ) individuels en forme de coque sur le corps tubulaire de type squelette de manière à ce que les au moins deux éléments ( 8 ) individuels en forme de coque et le au moins un longeron ( 4 ) puisse être remplacés indépendamment.

8. Procédé de fabrication d'un filtre à vapeur suivant la revendication 7,
**caractérisé en ce que** l'on fabrique les au moins deux éléments ( 8 ) individuels en forme de coque par fusion laser sélective.
